# FASCICULE DE BREVET EUROPEEN

(11) **EP 2 226 249 B1**
(45) Date de publication et mention de la délivrance du brevet: **20.05.2015**
(21) Numéro de dépôt: 10155235.4
(22) Date de dépôt: 02.03.2010
(51) Int. Cl.: B64G 1/66, H04B 7/185, B64G 1/10

(54) **Véhicule spatial muni d'un système d'amplification et procédé d'équilibrage**
Raumfahrzeug, das mit einem Verstärkungssystem ausgestattet ist, und entsprechendes Abgleichverfahren
Space vehicle equipped with an amplification system and balancing method

(30) Priorité: 05.03.2009 FR 0951391
(43) Date de publication de la demande: 08.09.2010
(73) Titulaire: Airbus Defence and Space SAS, 78130 Les Mureaux (FR)
(72) Inventeur: Billand, Marcel, 31410, Noé (FR); Alloatti, Philippe, 31120, Roquettes (FR)
(74) Mandataire: Fourcade, Emmanuelle

(56) Documents cités:
- EP-A- 0 817 309
- EP-A- 1 906 557
- WO-A-88/01455
- US-A- 3 917 998
- US-A- 6 157 811

## Description

La présente invention appartient au domaine des circuits d'amplification pour véhicules spatiaux de type satellite, et concerne plus particulièrement l'équilibrage des amplificateurs d'un dispositif d'amplification multivoies.

Un tel circuit d'amplification est connu de US 2,858,229, qui est considéré comme l'art antérieur le plus proche et décrit les caractéristiques du préambule de la revendication 1.

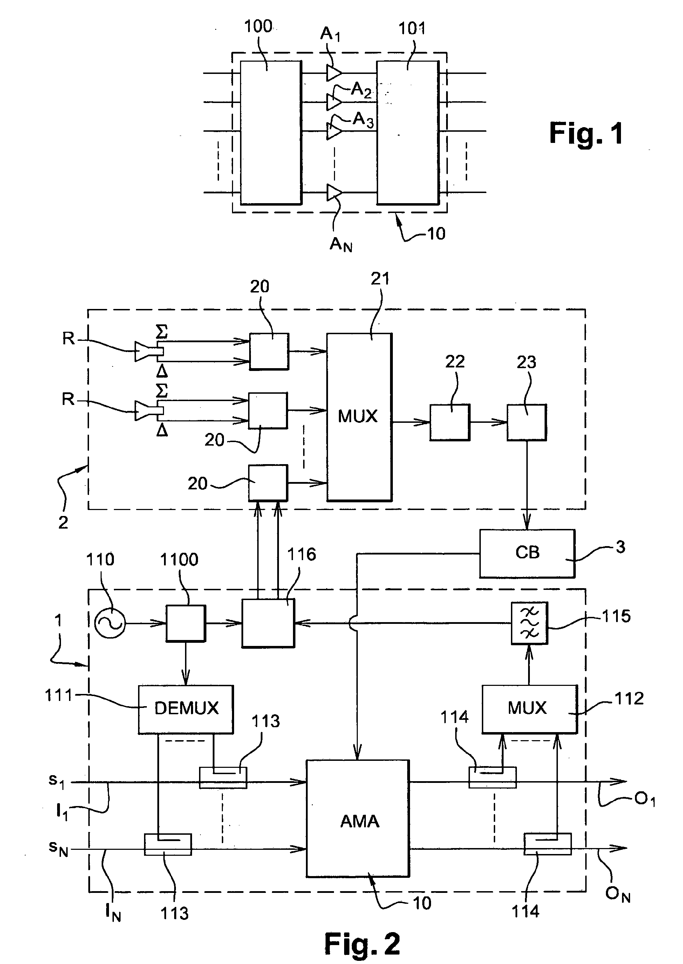

Les satellites comportant des antennes d'émission à faisceaux multiples ont fréquemment recours à un ou des dispositifs d'amplification multivoies, mis en oeuvre comme des amplificateurs multi-accès, ou AMA (également connus sous l'acronyme MPA dans la littérature anglo-saxonne, pour « Multi-Port Amplifier »), dont un schéma de principe est donné figure 1.

Un AMA 10 comporte un répartiteur passif en entrée 100 muni de P ports d'entrée, un répartiteur passif en sortie 101 muni de P ports de sortie, et N amplificateurs Aₙ (1 ≤ n ≤ N) agencés en parallèle entre les répartiteurs passifs en entrée et en sortie.

Le répartiteur passif en entrée 100 forme une matrice dite de Butler qui répartit chaque signal d'entrée présent sur un port d'entrée de l'AMA 10 vers les N amplificateurs Aₙ, en introduisant des déphasages prédéfinis. Le répartiteur passif en sortie 101 forme également une matrice de Butler qui distribue les signaux en sortie de chaque amplificateur Aₙ vers les P ports de sortie en introduisant des déphasages prédéfinis qui compensent les déphasages introduits par le répartiteur passif en entrée 100.

Dans le cas idéal où les amplificateurs sont équilibrés, c'est-à-dire qu'ils introduisent tous sensiblement le même gain et le même déphasage, pour un signal d'entrée présent sur un port d'entrée d'indice p (1 ≤ p ≤ P), les recombinaisons par le répartiteur passif en sortie 101 sont constructives uniquement vers le port de sortie de même indice p, et sont destructives vers les autres ports de sortie.

Cependant, dès lors que les amplificateurs ne sont plus équilibrés entre eux, les recombinaisons ne sont plus parfaitement destructives, et le signal d'entrée présent sur le port d'entrée d'indice p se retrouve de manière résiduelle sur les ports de sortie d'indices différents de p.

On comprend qu'il est primordial que les amplificateurs d'un AMA soient équilibrés entre eux afin de limiter la présence de tels signaux résiduels.

Dans le domaine des satellites, il est d'usage d'équilibrer les amplificateurs au sol, une fois pour toutes, lors de la fabrication de chaque AMA. En effet, les variations en gain et en déphasage sont faibles lors de l'exploitation du satellite, notamment du fait des radiofréquences d'opération considérées dans les satellites actuels.

Cependant, les variations en gain et en déphasage des amplificateurs ne s'avèrent plus négligeables notamment quand les radiofréquences d'opération augmentent, et on comprend que des moyens deviennent nécessaires pour maintenir l'équilibrage en orbite desdits amplificateurs. Pour ce faire, les ressources matérielles nécessaires doivent être minimisées, et toute interruption de la mission du satellite doit autant que possible être évitée.

La présente invention se propose de résoudre cette question de maintien d'équilibrage en orbite dans le cas d'un véhicule spatial comportant un système d'amplification muni d'un AMA et par ailleurs un système de mesure d'écartométrie radiofréquence.

Selon l'invention, le système de mesure d'écartométrie radiofréquence est partagé entre le système d'amplification et au moins un second système du véhicule spatial, et le véhicule spatial comporte des moyens de commande du gain et du déphasage de chaque amplificateur de l'AMA, qui corrigent des valeurs de gains et déphasages en fonction de valeurs, mesurées par le système de mesure d'écartométrie radiofréquence, qui sont représentatives de différences d'amplitude et de différences de phase entre un signal de référence et une pluralité de signaux modifiés, chaque signal modifié correspondant au signal de référence après modification par l'AMA.

De préférence, le système de mesure d'écartométrie radiofréquence est partagé avec un système de maintien de pointage d'au moins une antenne du véhicule spatial.

Pour partager efficacement le système de mesure d'écartométrie radiofréquence, celui-ci comporte des moyens de multiplexage qui multiplexent dans le temps les accès à des moyens de mesure du système de mesure d'écartométrie radiofréquence.

Une modification du signal de référence par l'AMA est obtenue en injectant ce signal de référence en un point d'injection de l'AMA étant soit un port d'entrée soit une entrée d'un amplificateur de l'AMA, et en mesurant chaque signal modifié en un point de mesure de l'AMA étant soit un port de sortie soit une sortie d'un amplificateur de l'AMA.

De préférence, le système d'amplification comporte des moyens de sélection en entrée et des moyens de sélection en sortie pour sélectionner un point d'injection et un point de mesure à la fois.

Pour effectuer des mesures de signaux modifiés sans interruption de la mission du véhicule spatial, le système d'amplification comporte pour chaque point d'injection de l'AMA des moyens de couplage qui somment le signal de référence avec un ou des signaux utiles dudit véhicule spatial.

De préférence, le système d'amplification comporte des moyens de filtrage entre l'AMA et le système de mesure d'écartométrie radiofréquence.

De préférence, le système d'amplification comporte des moyens d'adaptation fréquentielle des signaux de référence et modifié aux fréquences d'opération du système de mesure d'écartométrie radiofréquence.

L'invention concerne également un procédé d'équilibrage en orbite des N amplificateurs d'un AMA d'un véhicule spatial. Le procédé comporte les étapes suivantes :
- une étape de formation d'un signal de référence,
- une étape de mesure comportant les sous-étapes suivantes :
   a) injection du signal de référence en un point d'injection de l'AMA et mesure d'un signal modifié en un point de mesure de l'AMA,
   b) mesure de valeurs représentatives d'une différence d'amplitude et d'une différence de phase entre le signal de référence et le signal modifié, mesure qui est effectuée par un système de mesure d'écartométrie radiofréquence partagé entre au moins deux systèmes du véhicule spatial,
      les sous-étapes a) et b) étant exécutées pour au moins N paires différentes définies chacune par un point d'injection et un point de mesure de l'AMA,
- une étape d'estimation dans laquelle on détermine des valeurs estimées des gains et des déphasages introduits par chaque amplificateur de l'AMA,
- une étape de correction dans laquelle on détermine et on applique des corrections en gain et en déphasage à chaque amplificateur de l'AMA, pour que les gains et déphasages introduits par chaque amplificateur à équilibrer soient sensiblement les mêmes.

De préférence, les accès à des moyens de mesure du système de mesure d'écartométrie radiofréquence sont multiplexés dans le temps.

Pour ne pas interrompre la mission du véhicule spatial, le signal de référence est avantageusement multiplexé en fréquence avec un ou des signaux utiles à amplifier.

Selon l'invention, les corrections en gain et en déphasage sont déterminées soit par le véhicule spatial soit par une station de contrôle au sol.

La description suivante de modes de l'invention est faite en se référant aux figures, dans lesquelles des références identiques désignent des éléments identiques ou analogues, qui représentent de manière non limitative :
- Figure 1 : déjà décrite, un schéma de principe d'un dispositif d'amplification multivoies de type AMA,
- Figure 2 : un schéma de principe d'un système de mesure d'écartométrie radiofréquence et d'un système d'amplification d'un véhicule spatial selon l'invention.

La présente invention est applicable à tout type de véhicule spatial en vue d'équilibrer en orbite des amplificateurs d'un dispositif d'amplification multivoies. On considère pour les besoins de la description de modes de réalisation de l'invention le cas d'un véhicule spatial de type satellite.

Par « amplification », on entend plus particulièrement une amplification de puissance effectuée sur des signaux utiles d'une charge utile du satellite, avant émission sur un lien radioélectrique descendant.

Tel que représenté schématiquement sur la figure 2, le satellite selon l'invention comporte, outre un système d'amplification 1, un système de mesure d'écartométrie radiofréquence 2 qui est partagé entre ledit système d'amplification et au moins un second système du satellite non représenté sur la figure 2. Un exemple non limitatif de système nécessitant des mesures d'écartométrie radiofréquence, considéré dans la suite de la description, est un système de maintien de pointage du satellite, qui contrôle l'orientation d'une ou de plusieurs antennes du satellite dont le pointage doit être contrôlé en fonction de mesures effectuées par ledit système de mesure d'écartométrie radiofréquence.

Dans le satellite selon l'invention, le système d'amplification 1 utilise le système de mesure d'écartométrie radiofréquence 2 pour mesurer des valeurs représentatives d'une différence d'amplitude et d'une différence de phase entre des signaux qui seront détaillés dans la suite de la description.

Le satellite comporte également des moyens de commande 3 qui agissent sur les gains et les déphasages introduits par les amplificateurs Aₙ en fonction des valeurs mesurées par le système de mesure d'écartométrie radiofréquence 2.

Le système d'amplification 1 comporte un dispositif d'amplification multivoies de type AMA. Comme on l'a vu sur la figure 1, un AMA 10 comporte de manière connue N (N > 1) amplificateurs Aₙ, un répartiteur passif en entrée 100 comportant P (P > 1) ports d'entrée, et un répartiteur passif en sortie 101 comportant P ports de sortie.

Pour les besoins de la description de modes de réalisation de l'invention, on considère le cas non limitatif où P est égal à N ; l'AMA 10 comporte dans la suite de la description N ports d'entrée, N amplificateurs Aₙ et N ports de sortie.

Le système de mesure d'écartométrie radiofréquence 2 est couplé à l'AMA 10 pour mesurer des valeurs représentatives d'une différence d'amplitude et d'une différence de phase entre un signal de référence et un signal modifié.

Un signal modifié correspond au signal de référence injecté en un point d'injection Iₙ (1 ≤ n ≤ N) de l'AMA 10 et mesuré en point de mesure Oₘ (1 ≤ m ≤ N) dudit AMA après amplification par au moins un amplificateur Aₙ.

Les points d'injection Iₙ correspondent soit à des ports d'entrée de l'AMA 10, soit à des entrées des amplificateurs Aₙ à équilibrer, en aval du répartiteur passif en entrée 100. Les points de mesure Oₘ correspondent soit à des ports de sortie de l'AMA 10, soit à des sorties des amplificateurs Aₙ à équilibrer, en amont du répartiteur passif en sortie 101. Dans l'exemple représenté sur la figure 2, les points d'injection Iₙ et les points de mesure Oₘ correspondent aux ports d'entrée et aux ports de sortie de l'AMA 10.

Une paire constituée d'un point d'injection Iₙ et d'un point de mesure Oₘ, notée IₙOₘ, permet d'évaluer soit une amplification fournie par l'AMA 10 dans le cas où m = n, soit un couplage parasite dans le cas où m ≠ n.

On considère des paires pour lesquelles au moins un amplificateur Aₙ est utilisé. Par exemple dans le cas où les points d'injection d'une part et les points de mesure d'autre part sont respectivement les entrées et les sorties des amplificateurs Aₙ à équilibrer, les paires IₙOₘ avec m ≠ n n'utilisent pas au moins un amplificateur et ne sont pas considérées pour l'équilibrage.

De préférence, le système d'amplification 1 comporte des moyens de formation 110 du signal de référence qui sont couplés au système de mesure d'écartométrie radiofréquence 2 d'une part et à chaque point d'injection Iₙ de l'AMA 10 d'autre part, par exemple via un circuit diviseur 1100. Les moyens de formation 110 comportent par exemple un oscillateur local embarqué dans le satellite. Dans une variante, les moyens de formation sont des moyens de réception d'un signal de référence émis par une station de contrôle au sol ou par un autre satellite.

Le signal de référence est de préférence un signal sensiblement sinusoïdal, de fréquence principale comprise dans une bande fréquentielle d'opération de l'AMA 10.

Les moyens de commande 3 sont couplés au système de mesure d'écartométrie radiofréquence 2, et comportent principalement une unité de calcul étant par exemple le calculateur bord du satellite (désigné CB sur la figure 2).

Les moyens de commande 3 déterminent des corrections de gain et de déphasage pour chaque amplificateur Aₙ, à mettre en oeuvre pour que lesdits amplificateurs soient équilibrés entre eux, c'est-à-dire pour qu'ils introduisent sensiblement les mêmes gains et déphasages.

De préférence, les corrections de gain et de déphasage sont déterminées directement par les moyens de commande 3 en fonction de valeurs estimées du gain et du déphasage introduits par chaque amplificateur Aₙ à équilibrer, valeurs estimées qui sont elles-mêmes déterminées en fonction des valeurs représentatives de différences d'amplitude et de phase mesurées.

Suivant d'autres modes de réalisation, les corrections de gain et de déphasage sont déterminées indirectement par les moyens de commande 3, auquel cas les valeurs représentatives de différences d'amplitude et de phase mesurées par le système de mesure d'écartométrie radiofréquence 2 sont transmises par les moyens de commande 3 à la station de contrôle au sol sur la voie de télémétrie du satellite, et les corrections de gain et de déphasage sont reçues de ladite station de contrôle sur la voie télécommande.

Pour déterminer les valeurs estimées des gains et des déphasages introduits par chaque amplificateur Aₙ, il est nécessaire de mesurer des valeurs représentatives de différences d'amplitude et de phase pour au moins N paires IₙOₘ différentes, chaque amplificateur Aₙ à équilibrer étant utilisé dans au moins une desdites paires différentes. On détermine alors au moins N valeurs représentatives d'une différence d'amplitude et au moins N valeurs représentatives d'une différence de phase, à partir desquelles il est possible de déterminer N valeurs estimées de gain et N valeurs estimées de déphasage.

De préférence, le système d'amplification 1 comporte un point d'injection Iₙ pour chaque port d'entrée (le cas échéant, pour chaque entrée d'amplificateur Aₙ) et un point de mesure Oₘ pour chaque port de sortie (le cas échéant, pour chaque sortie d'amplificateur Aₙ), et des mesures sont effectuées pour toutes les paires d'amplification IₙOₘ, m = n, 1 ≤ n ≤ N, de l'AMA 10. Avantageusement, des mesures sont également effectuées pour tout ou partie des paires de couplage parasite IₙOₘ, m ≠ n.

Les corrections de gain et de déphasage pour chaque amplificateur Aₙ à équilibrer sont mises en oeuvre par l'AMA 10 dont chaque amplificateur Aₙ à équilibrer est par exemple muni d'au moins un module à gain variable et d'au moins un module à déphasage variable.

Le système de mesure d'écartométrie radiofréquence 2 comporte de préférence un ou des senseurs radiofréquences R délivrant deux signaux couramment appelés sigma Σ et delta Δ, entre lesquels sont mesurés des valeurs représentatives d'une différence d'amplitude et d'une différence de phase.

En pratique, le système de mesure d'écartométrie radiofréquence 2 est dimensionné pour le système de maintien de pointage, du fait qu'une précision recherchée pour contrôler le dépointage des antennes du satellite est généralement supérieure à une précision nécessaire pour assurer l'équilibrage des amplificateurs Aₙ de l'AMA 10.

Dans un mode préféré de réalisation, le système de mesure d'écartométrie radiofréquence 2 comporte les éléments suivants :
- des moyens de combinaison 20 des signaux à comparer,
- des moyens de multiplexage 21 couplés aux sorties de chacun des moyens de combinaison 20,
- des moyens de conversion en fréquence 22 couplés à une sortie des moyens de multiplexage 21,
- des moyens de mesure 23 couplés à une sortie des moyens de conversion en fréquence 22.

Chacun des moyens de combinaison 20 est par exemple un circuit modulateur amplitude/phase qui forme un signal composite à partir d'un signal sigma Σ et d'un signal delta Δ, ou à partir d'un signal de référence et d'un signal modifié.

Au moins un des moyens de combinaison 20 est couplé au système d'amplification 1, et reçoit en entrée un signal de référence et un signal modifié.

Les moyens de multiplexage 21 multiplexent dans le temps les signaux composites en entrée desdits moyens de multiplexage, de sorte qu'un signal composite à la fois est fourni en entrée des moyens de conversion en fréquence 22 et des moyens de mesure 23.

Le système de maintien de pointage 2 étant multiplexé en temps, les mesures effectuées pour équilibrer les amplificateurs de l'AMA 10 ne perturbent pas les mesures effectuées pour corriger des dépointages des antennes de réception, et inversement.

Le signal composite est de préférence ramené dans des fréquences d'opération inférieures par les moyens de conversion en fréquence 22, en utilisant des moyens connus de l'homme de l'art.

Après conversion en fréquence du signal composite, les moyens de mesure 23 (par exemple un récepteur d'écartométrie muni d'un microcontrôleur) déterminent des valeurs représentatives d'une différence d'amplitude et de phase entre :
- les signaux sigma Σ et delta Δ en sortie du senseur radiofréquence R, dans le cas d'une mesure liée à un maintien de pointage,
- les signaux de référence et modifié dans le cas d'une mesure liée à un équilibrage des amplificateurs Aₙ, valeurs qui sont utilisées par les moyens de commande 3 pour déterminer les corrections de gain et de déphasage.

On comprend que le satellite selon l'invention permet d'évaluer en orbite les éventuels déséquilibrages entre les différents amplificateurs Aₙ, et de les corriger de façon automatisée en boucle fermée, éventuellement avec le support de la station de contrôle au sol.

Du fait du partage du système de mesure d'écartométrie radiofréquence 2 entre le système d'amplification 1 et le système de maintien de pointage, les ressources matérielles supplémentaires sont limitées.

Dans un mode particulier de réalisation du satellite, adapté au cas où les fréquences d'opération du système d'amplification 1 et du système de mesure d'écartométrie radiofréquence 2 sont différentes, le système d'amplification 1 comporte également des moyens d'adaptation 116 desdites fréquences d'opération.

Dans le cas où le système d'amplification 1 est utilisé pour l'amplification de puissance des signaux utiles émis en bande Ka descendante et en considérant un signal de référence de fréquence principale voisine de 20 GHz, et dans le cas où système de mesure d'écartométrie radiofréquence 2 est utilisé pour effectuer des mesures sur des signaux en bande Ka montante (aux alentours de 30 GHz), l'adaptation en fréquence se fait en décalant à la fois le signal de référence et le signal modifié d'approximativement 10 GHz, en mettant en oeuvre des moyens connus de l'homme de l'art.

Dans un autre mode particulier de réalisation du satellite, le système d'amplification 1 comporte des moyens de sélection en entrée 111 et des moyens de sélection en sortie 112.

Les moyens de sélection en entrée 111 sont couplés aux moyens de formation 110 d'une part, via le circuit diviseur 1100 dans l'exemple représenté sur la figure 2, et aux différents points d'injection Iₙ d'autre part. Lesdits moyens de sélection en entrée permettent d'aiguiller le signal de référence vers un point d'injection Iₙ à la fois, c'est-à-dire de sélectionner un point d'injection Iₙ parmi tous les points d'injection disponibles.

De façon analogue, les moyens de sélection en sortie 112 sont couplés à la fois au système de mesure d'écartométrie radiofréquence 2 et aux différents points de mesure Oₘ, et permettent de sélectionner, en association avec les moyens de sélection en entrée 111, une paire IₙOₘ à la fois.

Les moyens de sélection en entrée 111 et les moyens de sélection en sortie 112 sont par exemple respectivement un circuit démultiplexeur (désigné DEMUX sur la figure 2) et un circuit multiplexeur (désigné MUX).

Le système d'amplification 1 comporte de préférence en chaque point d'injection Iₙ des moyens de couplage 113 du signal de référence avec un signal utile Sₙ présent au niveau du point d'injection Iₙ correspondant à un signal devant être amplifié par l'AMA 10, et des moyens de couplage 114 au niveau de chaque point de mesure Oₘ.

Les moyens de couplage 113 sont par exemple un circuit coupleur qui réalise essentiellement une somme du signal de référence et du signal utile Sₙ. Les moyens de couplage 114 sont par exemple un circuit diviseur, qui aiguille un signal au niveau d'un point de mesure Oₘ à la fois vers le système de mesure d'écartométrie radiofréquence 2 et vers les éléments suivants d'une chaîne de traitement du signal utile Sₙ.

En considérant un signal de référence de fréquence principale essentiellement non comprise dans des bandes de fréquences desdits signaux utiles, mais comprise dans une bande de fréquences d'opération de l'AMA 10, un multiplexage fréquentiel du signal de référence avec chaque signal utile est obtenu en chaque point d'injection Iₙ. Dans le cas où les signaux utiles sont de fréquences comprises dans la bande Ka descendante, par exemple entre 18.3 GHz et 18.8 GHz, un signal de référence de fréquence principale voisine de 20GHz perturbe peu ou pas lesdits signaux utiles.

Du fait des moyens de couplage 113, des moyens de couplage 114 et de la fréquence principale du signal de référence essentiellement non comprise dans des bandes de fréquences des signaux utiles, l'équilibrage des amplificateurs Aₙ est effectué sans interruption de la mission du satellite.

Le système d'amplification 1 comporte de préférence des moyens de filtrage 115 en entrée du système de mesure d'écartométrie radiofréquence 2.

Lesdits moyens de filtrage 115 atténuent peu ou pas la fréquence principale du signal de référence, tandis que les fréquences correspondant aux signaux utiles sont fortement atténuées.

Du fait des moyens de filtrage 115, les signaux utiles perturbent peu ou pas les mesures de valeurs représentatives de différences d'amplitude et de phase effectuées par le système de mesure d'écartométrie radiofréquence 2.

De manière plus générale, les moyens de formation 110 forment dans une variante une pluralité de signaux de référence de fréquences principales différentes, comprises dans la bande fréquentielle d'opération de l'AMA 10.

La présente invention concerne également un procédé d'équilibrage en orbite des N amplificateurs d'un dispositif d'amplification multivoies de type AMA 10 embarqué dans un satellite.

Le procédé comporte principalement les étapes suivantes :
- une étape de formation,
- une étape de mesure,
- une étape d'estimation,
- une étape de correction.

Au cours de l'étape de formation, on forme un signal de référence, qui est généré à bord du satellite ou reçu d'une station de contrôle au sol.

Au cours de l'étape de mesure, on effectue des mesures pour un ensemble d'au moins N paires IₙOₘ différentes, chacun des N amplificateurs Aₙ à équilibrer étant utilisé dans au moins une desdites paires différentes, et on exécute, pour chaque paire considérée, les sous-étapes suivantes :
a) injection du signal de référence au point d'injection de la paire considérée et mesure d'un signal modifié au point de mesure de ladite paire considérée,
b) mesure de valeurs représentatives d'une différence d'amplitude et d'une différence de phase entre le signal de référence et le signal modifié, mesure qui est effectuée par un système de mesure d'écartométrie radiofréquence 2 partagé entre au moins deux systèmes du satellite,

Au cours de l'étape d'estimation, on détermine des valeurs estimées des gains et des déphasages introduits par chaque amplificateur à équilibrer de l'AMA 10, en fonction de tout ou partie des valeurs représentatives de différences d'amplitude et de différences de phase mesurées pour les au moins N paires IₙOₘ différentes dans l'étape de mesure, qui sont des paires d'amplification IₙOₘ, m = n et/ou des paires de couplage parasite IₙOₘ, m ≠ n.

Au cours de l'étape de correction, on détermine et on applique des corrections en gain et en déphasage pour chaque amplificateur de l'AMA 10. Lesdites corrections en gain et en déphasage sont déterminées en fonction des valeurs estimées des gains et déphasages introduits par chaque amplificateur, pour que lesdits gains et déphasages aient des valeurs sensiblement égales après correction.

Les corrections en gain et en déphasage sont déterminées soit par le satellite, soit par une station de contrôle au sol.

Dans un mode préféré de mise en oeuvre, dans la sous-étape b) de l'étape de mesure, les accès aux moyens de mesure 23 du système de mesure d'écartométrie radiofréquence 2 sont multiplexés dans le temps.

D'autre part, le signal de référence et les signaux utiles de la charge utile du satellite sont de préférence multiplexés en fréquence, pour éviter toute interruption de la mission du satellite.

De manière plus générale, le procédé pourra être mis en oeuvre en considérant une pluralité de signaux de référence de fréquences principales différentes. On détermine des corrections en gain et en amplitude pour chaque amplificateur en tenant compte des valeurs représentatives de différences d'amplitude et de différences de phase mesurées pour chaque fréquence principale, par exemple en calculant des valeurs moyennes des valeurs représentatives de différences d'amplitude d'une part et des valeurs représentatives de différences de phase d'autre part.

## Revendications

1. Véhicule spatial comportant un système de mesure d'écartométrie radiofréquence (2) et un système d'amplification (1) de signaux utiles, ledit système d'amplification comportant un dispositif d'amplification multivoies dit « AMA » (10) muni d'une pluralité d'amplificateurs (Aₙ) à équilibrer, le véhicule spatial étant **caractérisé en ce que** le système de mesure d'écartométrie radiofréquence (2) est partagé entre le système d'amplification (1) et au moins un second système du véhicule spatial, et **en ce qu'**il comporte des moyens de commande (3) du gain et du déphasage de chaque amplificateur (Aₙ) de l'AMA (10), agissant sur des valeurs de gains et déphasages en fonction de valeurs mesurées par le système de mesure d'écartométrie radiofréquence (2), valeurs mesurées qui sont représentatives de différences d'amplitude et de différences de phase entre un signal de référence et une pluralité de signaux modifiés, chaque signal modifié correspondant audit signal de référence après modification par l'AMA (10).

2. Véhicule spatial selon la revendication 1, dans lequel le système de mesure d'écartométrie radiofréquence (2) est partagé avec un système de maintien de pointage d'au moins une antenne du véhicule spatial.

3. Véhicule spatial selon la revendication 1 ou 2, dans lequel le système de mesure d'écartométrie radiofréquence (2) comporte des moyens de multiplexage (21) qui multiplexent dans le temps les accès à des moyens de mesure (23) dudit système de mesure d'écartométrie radiofréquence.

4. Véhicule spatial selon l'une des revendications précédentes, dans lequel le signal de référence est injecté en un point d'injection (Iₙ) de l'AMA (10) étant soit un port d'entrée soit une entrée d'un amplificateur (Aₙ) dudit AMA, et chaque signal modifié est mesuré en un point de mesure (Oₘ) de l'AMA (10) étant soit un port de sortie soit une sortie d'un amplificateur (Aₙ) dudit AMA.

5. Véhicule spatial selon la revendication 4, dans lequel le système d'amplification (1) comporte des moyens de sélection en entrée (111) et des moyens de sélection en sortie (112) pour sélectionner un point d'injection (Iₙ) et un point de mesure (Oₘ) à la fois.

6. Véhicule spatial selon la revendication 4 ou 5, dans lequel le système d'amplification (1) comporte en chaque point d'injection (Iₙ) de l'AMA (10) des moyens de couplage (113) qui somment le signal de référence avec un ou des signaux utiles dudit véhicule spatial.

7. Véhicule spatial selon la revendication 6, dans lequel le système d'amplification (1) comporte des moyens de filtrage (115) entre l'AMA (10) et le système de mesure d'écartométrie radiofréquence (2).

8. Véhicule spatial selon l'une des revendications précédentes, comportant des moyens d'adaptation fréquentielle (116) du signal de référence et du signal modifié aux fréquences d'opération du système de mesure d'écartométrie radiofréquence (2).

9. Procédé d'équilibrage de N amplificateurs (Aₙ) d'un dispositif d'amplification multivoies, dit « AMA » (10), embarqué dans un véhicule spatial pour l'amplification de signaux utiles, **caractérisé en ce qu'**il comporte :
- une étape de formation d'un signal de référence,
- une étape de mesure comportant les sous-étapes suivantes :
a) injection du signal de référence en un point d'injection (Iₙ) de l'AMA (10) et mesure d'un signal modifié en un point de mesure (Oₘ) dudit AMA,
b) mesure de valeurs représentatives d'une différence d'amplitude et d'une différence de phase entre le signal de référence et le signal modifié, mesure qui est effectuée par un système de mesure d'écartométrie radiofréquence (2) partagé entre au moins deux systèmes du véhicule spatial,
lesdites sous-étapes a) et b) étant exécutées pour au moins N paires différentes définies chacune par un point d'injection (Iₙ) et un point de mesure (Oₘ) de l'AMA (10),
- une étape d'estimation dans laquelle on détermine des valeurs estimées des gains et des déphasages introduits par chaque amplificateur (Aₙ) à équilibrer de l'AMA (10),
- une étape de correction dans laquelle on détermine et on applique des corrections en gain et en déphasage à chaque amplificateur (Aₙ) de l'AMA (10), pour que les gains et déphasages introduits par chaque amplificateur à équilibrer soient sensiblement les mêmes.

10. Procédé selon la revendication 9, dans lequel les accès à des moyens de mesure (23) du système de mesure d'écartométrie radiofréquence (2) sont multiplexés dans le temps.

11. Procédé selon l'une des revendications 9 à 10, dans lequel le signal de référence est multiplexé en fréquence avec un ou des signaux utiles.

12. Procédé selon l'une des revendications 9 à 11, dans lequel les corrections en gain et en déphasage sont déterminées soit par le véhicule spatial soit par une station de contrôle au sol.

## Patentansprüche

1. Raumfahrzeug, ein Radiofrequenz-Abweichungsmesssystem (2) und ein Verstärkersystem (1) für Nutzsignale umfassend, wobei das besagte Verstärkersystem eine Multiport-Verstärkeranlage umfasst, die "MPA" (10) genannt wird, und mit einer Vielzahl von Verstärkern (Aₙ) ausgerüstet ist, die auszugleichen sind, wobei das Raumfahrzeug **dadurch gekennzeichnet ist, dass** das Radiofrequenz-Abweichungsmesssystem (2) zwischen dem Verstärkersystem (1) und zumindest einem zweiten System des Raumfahrzeugs aufgeteilt wird, und dadurch, dass es Steuermittel (3) für den Faktor und den Phasenversatz eines jeden Verstärkers (Aₙ) der MPA (10) umfasst, die sich in Abhängigkeit von den Werten, die vom Radiofrequenz-Abweichungsmesssystem (2) gemessen werden, auf die Faktorwerte und die Phasenversatzwerte auswirken, wobei die Messwerte repräsentativ für Amplitudenunterschiede und Phasenunterschiede zwischen einem Referenzsignal und einer Vielzahl von geänderten Signalen sind, wobei jedes geänderte Signal dem besagten Referenzsignal nach erfolgter Änderung durch die MPA (10) entspricht.

2. Raumfahrzeug nach Anspruch 1, wobei das Radiofrequenz-Abweichungsmesssystem (2) mit einem Zielhaltesystem zumindest einer Antenne des Raumfahrzeugs geteilt wird.

3. Raumfahrzeug nach Anspruch 1 oder 2, wobei das Radiofrequenz-Abweichungsmesssystem (2) Multiplexing-Mittel (21) umfasst, die die Zugriffe auf Messmittel (23) des besagten Radiofrequenz-Abweichungsmesssystem mit der Zeit multiplexen.

4. Raumfahrzeug nach einem der vorherigen Ansprüche, wobei das Referenzsignal an einem Übergabepunkt (Iₙ) der MPA (10) übergeben wird, der entweder ein Eingangsport oder ein Eingang eines Verstärkers (Aₙ) der besagten MPA ist, und jedes veränderte Signal an einem Messpunkt (Oₘ) der MPA (10) gemessen wird, der entweder ein Ausgangsport oder ein Ausgang eines Verstärkers (Aₙ) der besagten MPA ist.

5. Raumfahrzeug nach Anspruch 4, wobei das Verstärkersystem (1) Auswahlmittel am Eingang (111) und Auswahlmittel am Ausgang (112) umfasst, um zugleich einen Übergabepunkt (Iₙ) und einen Messpunkt (Oₘ) auszuwählen.

6. Raumfahrzeug nach Anspruch 4 oder 5, wobei das Verstärkersystem (1) an jedem Übergabepunkt (Iₙ) der MPA (10) Koppelmittel (113) umfasst, die das Referenzsignal zu einem oder mehreren Nutzsignalen des besagten Raumfahrzeugs hinzufügen.

7. Raumfahrzeug nach Anspruch 6, wobei das Verstärkersystem (1) Filtermittel (115) zwischen der MPA (10) und dem Radiofrequenz-Abweichungsmesssystem (2) umfasst.

8. Raumfahrzeug nach einem der vorherigen Ansprüche, Mittel zur Frequenzanpassung (116) des Referenzsignals und des auf die Betriebsfrequenzen des Radiofrequenz-Abweichungsmesssystems (2) geänderten Signals umfassend.

9. Verfahren zum Ausgleichen von N Verstärkern (Aₙ) einer Multiport-Verstärkeranlage, die "MPA" (10) genannt wird, und zur Verstärkung von Nutzsignalen in einem Raumfahrzeug eingebaut ist, **dadurch gekennzeichnet, dass** es folgendes umfasst:
- einen Schritt zur Bildung eines Referenzsignals,
- einen Messschritt, die folgenden Unterschritte umfassend:
a) die Übergabe des Referenzsignals an einen Übergabepunkt (Iₙ) der MPA (10) und die Messung eines geänderten Signals in einem Messpunkt (Oₘ) der besagten MPA,
b) die Messung von repräsentativen Werten eines Amplitudenunterschieds und eines Phasenunterschieds zwischen dem Referenzsignal und dem geänderten Signal, eine Messung, die durch ein Radiofrequenz-Abweichungsmesssystem (2) durchgeführt wird, das zwischen zumindest zwei Systemen des Raumfahrzeugs geteilt wird,
wobei die besagten Unterschritte a) und b) für zumindest N verschiedene Paare ausgeführt werden, die jeweils durch einen Übergabepunkt (Iₙ) und einen Messpunkt (Oₘ) der MPA (10) definiert werden,
- einen Schätzungsschritt, bei dem man die Schätzwerte der Faktoren und des Phasenversatzes bestimmt, die durch jeden auszugleichenden Verstärker (Aₙ) der MPA (10) eingeführt werden,
- einen Korrekturschritt, bei dem man Korrekturen des Faktors und des Phasenversatzes bestimmt und sie auf jeden Verstärker (Aₙ) der MPA (10) anwendet, damit die Faktoren und der Phasenversatz, die durch jeden auszugleichenden Verstärker eingeführt werden, in etwa dieselben sind.

10. Verfahren nach Anspruch 9, wobei die Zugriffe auf Messmittel (23) des Radiofrequenz-Abweichungsmesssystems (2) mit der Zeit gemuliplext werden.

11. Verfahren nach einem der Ansprüche 9 bis 10, wobei das Referenzsignal in der Frequenz mit einem oder mehreren Nutzsignalen gemultiplext werden.

12. Verfahren nach einem der Ansprüche 9 bis 11, wobei die Korrekturen der Faktoren und des Phasenversatzes entweder durch das Raumfahrzeug oder durch eine Bodenkontrollstation bestimmt werden.

## Claims

1. A space vehicle comprising a radiofrequency deviation measurement system (2) and an amplification system (1) of required signals, the said amplification system including a multichannel amplification device, known as the "AMA" (10), equipped with multiple amplifiers (Aₙ) to balance, the space vehicle being **characterised in that** the radiofrequency deviation measurement system (2) is shared between the amplification system (1) and at least one second system of the space vehicle, and **in that** it comprises control means (3) of the gain and phase difference of each amplifier (Aₙ) of the AMA (10), acting on gain values and phase difference values, according to the values measured by the radiofrequency deviation measurement system (2), the values measured being representative of the differences in amplitude and phase differences between a reference signal and multiple modified signals, each modified signal corresponding to the said reference signal after modification by the AMA (10).

2. A space vehicle according to claim 1, wherein the radiofrequency deviation measurement system (2) is shared with an aiming keeping system of at least one antenna of the space vehicle.

3. A space vehicle according to claim 1 or 2, wherein the radiofrequency deviation measurement system (2) includes multiplexing means (21), which multiplex access to the measuring means (23) of the said radiofrequency deviation measurement system over time.

4. A space vehicle according to one of the previous claims, wherein the reference signal is injected into an injection point (Iₙ) of the AMA (10), either being an input port or an input of an amplifier (Aₙ) of the said AMA, and each modified signal is measured in a measuring point (Oₘ) of the AMA (10), either being an output point or an output of an amplifier (Aₙ) of the said AMA.

5. A space vehicle according to claim 4, wherein the amplification system (1) includes input selection means (111) and output selection means (112) to select and injection point (Iₙ) and a measuring point (Oₘ) at once.

6. A space vehicle according to claim 4 or 5, wherein the amplification system (1) includes in each injection point (Iₙ) of the AMA (10), coupling means (113), which add the reference signal with one or several required signals of the said space vehicle.

7. A space vehicle according to claim 6, wherein the amplification system (1) includes filtering means (115) between the AMA (10) and the radiofrequency deviation measurement system (2).

8. A space vehicle according to one of the previous claims, including frequency adaptation means (116) of the reference signal and the signal modified at the operating frequencies of the radiofrequency deviation measurement system (2).

9. A method of balancing N amplifiers (Aₙ) of a multichannel amplification device, known as the "AMA" (10), put on board a space vehicle to amplify required signals, **characterised in that** it includes:
- a step of forming a reference signal,
- a step of measurement, including the following sub-steps:
a) injection of the reference signal into an injection point (Iₙ) of the AMA (10) and measurement of a modified signal in a measuring point (Oₘ) of the said AMA,
b) measurement of values representative of a difference in amplitude and a phase difference between the reference signal and the modified signal, a measurement which is made by a radiofrequency deviation measurement system (2), shared between at least two systems of the space vehicle,
the said sub-steps a) and b) being carried out for at least N different pairs, each one being defined by an injection point (Iₙ) and a measuring point (Oₘ) of the AMA (10),
- a step of estimation, wherein the estimated values of gains and phase differences introduced by each amplifier (Aₙ) to balance the AMA (10) are determined,
- a step of correction, wherein gain and phase difference corrections are determined and applied to each amplifier (Aₙ) of the AMA (10), so that the gains and phase differences introduced by each amplifier to balance, are substantially the same.

10. A method according to claim 9, wherein access to means of measuring (23) the radiofrequency deviation measurement system (2) are multiplexed over time.

11. A method according to one of the claims 9 to 10, wherein the reference signal is multiplexed in frequency with one or several required signals.

12. A method according to one of the claims 9 to 11, wherein the gain and phase difference corrections are determined either by the space vehicle or a control station on the ground.
